# DEMANDE DE BREVET EUROPEEN

(11) **EP 3 385 722 A1**
(43) Date de publication de la demande: **10.10.2018**
(21) Numéro de dépôt: 18161961.0
(22) Date de dépôt: 31.03.2011
(51) Int. Cl.: G01P 3/44, G01P 3/487, G01P 1/02, F16C 41/00

(54) **ASSEMBLAGE INSTRUMENTÉ POUR FUSÉE D'ESSIEU ET PROCÉDÉ DE MONTAGE**

(30) Priorité: 30.04.2010 FR 1001871
(62) Demande divisionnaire de: 11730997.1
(71) Demandeur: NTN-SNR Roulements, 74000 Annecy (FR)
(72) Inventeur: BALLAS, Gérard, 74960 Annecy (Gran Gevrier) (FR); CHAUDIER, Bernard, 74600 Seynod (FR); LESIGNE, Clotilde, 74350 Cuvat (FR)
(74) Mandataire: Alatis

(57) **Abrégé**

Un assemblage instrumenté pour fusée d'essieu comprend un chapeau de fusée (26) comportant un fond (26.1) pourvu d'au moins un trou débouchant (26.3) et d'une jupe (26.2) définissant un axe géométrique de référence (ZZ), la jupe présentant une extrémité distale (26.6) opposée au fond et constituant une face d'appui axial, le chapeau de fusée présentant un plus grand diamètre extérieur D1, et un anneau codeur magnétique (36), fixé soit à un support (40, 50) fixe par rapport au chapeau de fusée (26) présentant un diamètre D3, en recouvrement axial avec le chapeau de fusée (26), soit directement au chapeau de fusée (26), et présente un diamètre extérieur D2 inférieur à D1. L'assemblage comporte en outre un capot de protection (42) de l'anneau codeur (36), comportant une jupe de protection (42.1) en matériau amagnétique recouvrant l'anneau codeur.

## Description

### LIEN AVEC UNE DEMANDE ANTÉRIEURE

La présente demande est une division de la demande de brevet européen n° 11730997.1, dont le contenu est intégré ici dans son intégralité par référence.

### DOMAINE TECHNIQUE DE L'INVENTION

L'invention se rapporte au domaine des arbres ou essieux à roulements instrumentés. Il s'agit de roulements de grandes dimensions et supportant des charges élevées. L'instrumentation de tels roulements consiste à monter des capteurs de vitesse et/ou de température et/ou de vibrations généralement sur la partie fixe du roulement ; la partie mobile de l'instrumentation est montée sur l'autre bague du roulement.

Plus précisément la présente invention vise un assemblage instrumenté à roulement pour essieu et chapeau de fusée ainsi qu'une rondelle frein pour un tel assemblage.

### ÉTAT DE LA TECHNIQUE ANTÉRIEURE

Dans la demande de brevet française déposée au nom de la demanderesse sous le numéro national d'enregistrement FR 0806050, on décrit un assemblage instrumenté à roulement pour une fusée d'essieu ferroviaire selon lequel un codeur magnétique annulaire est fixé axialement à l'extérieur du roulement, sur une entretoise elle-même liée à la bague intérieure du roulement montée sur la fusée de l'essieu. Un capteur fixe est disposé en regard du codeur magnétique. Un ou plusieurs déflecteurs permettent de protéger l'intérieur du roulement ainsi que le codeur vis-à-vis de la pollution extérieure. Ce ou ces déflecteurs présentent au moins une partie amagnétique au niveau où le capteur et le codeur sont disposés en regard l'un de l'autre. Les déflecteurs proposés dans cet art antérieur sont complexe et tout à fait spécifiques du roulement à instrumenter.

Cette solution n'est donc applicable qu'à un nombre limité de roulements. Elle est coûteuse en ce sens que le ou les déflecteurs sont des pièces supplémentaires spécifiques qui s'ajoutent aux pièces existantes (entretoises, codeur, capteur...) nécessaires au fonctionnement d'une telle instrumentation.

De plus un tel codeur destiné à être monté sur le chapeau de la fusée d'un essieu avant le montage du chapeau de fusée sur la fusée, n'est pas protégé en lui-même. De ce fait, il arrive que les chocs induits par la manutention notamment lors du stockage et du montage du chapeau de fusée sur la fusée d'essieu, par exemple par des coups de marteau, notamment pour replier les pattes de la tôle frein sur les têtes de vis une fois le chapeau de fusée fixé sur la fusée, endommagent le codeur qui est un élément relativement fragile.

On connaît d'autres exemples de montage d'un codeur, constitué par une roue phonique ou un anneau magnétique, sur un chapeau de fusée, comme décrit par exemple dans les documents EP 1 211 500 A1 ou US6161962. Dans ces exemples, le codeur forme une couronne en saillie radiale par rapport au chapeau de fusée, présentant des risques non négligeables de détérioration lors du montage du chapeau de fusée sur la fusée d'essieu.

Dans le document EP 0 213 732 A1 est proposé, dans un contexte un peu différent d'une roue de véhicule automobile à fusée fixe, de positionner un codeur magnétique sur un moyeu de roue. Pour lui conférer une cohérence mécanique nécessaire à son emmanchement en force sur le moyeu, le codeur est intégré à un anneau de renfort en matière synthétique.

On connaît aussi des montages où le codeur est placé à l'intérieur du roulement comme décrit par exemple dans la demande de brevet française déposée au nom de la demanderesse sous le numéro national d'enregistrement FR 0851217 ; dans ce cas, le codeur est en contact direct avec la graisse présente à l'intérieur du roulement ; il est aussi en contact avec les particules et autres éléments de pollution présents à l'intérieur du roulement, de plus en plus nombreux à mesure du vieillissement du roulement et du codeur lui-même.

En outre cet assemblage nécessite un déflecteur en plusieurs parties, ce qui est complexe et coûteux. Certaines parties du déflecteur présentent des zones de fragilité mécanique, ce qui pose problème car dans les applications envisagées, des charges mécaniques importantes sont exercées sur les roulements et les pièces associées.

Cet assemblage est très spécifique et il n'est pas possible de le monter sur d'autres types de roulements que celui pour lequel il est initialement prévu. En particulier il n'est pas possible de le monter sur des roulements d'enveloppe standard.

De plus les codeurs ou détecteurs qui, par nature sont des pièces sensibles et fragiles, ne sont pas bien protégées notamment avant leur mise en place dans l'assemblage.

Dans le document US 4 732 494 est décrit un anneau codeur magnétique inséré dans une gorge d'un anneau support lui-même fixé à une bague intérieure de roulement. La problématique est ici de garantir la cohérence mécanique de l'anneau lors de son montage sur la bague.

### EXPOSÉ DE L'INVENTION

L'invention vise à remédier aux inconvénients de l'état de la technique et notamment à réaliser de manière simple et fiable une protection efficace d'un codeur magnétique intégré à un chapeau de fusée d'essieu, notamment au cours des opérations de montage du chapeau de fusée sur la fusée d'essieu ou de démontage.

Pour ce faire est proposé selon un premier aspect de l'invention un assemblage instrumenté pour fusée d'essieu comprenant :
- un chapeau de fusée comportant un fond pourvu d'au moins un trou débouchant et une jupe définissant un axe géométrique de référence, la jupe présentant une extrémité distale opposée au fond et constituant une face d'appui axial, le chapeau de fusée présentant un plus grand diamètre extérieur D1, et
- un anneau codeur magnétique fixé soit à un support fixe par rapport au chapeau de fusée présentant un diamètre D3, en recouvrement axial avec la jupe ou le fond du chapeau de fusée, soit au chapeau de fusée, et présente un diamètre extérieur D2 inférieur à D1.

Du fait de la différence de diamètre, le chapeau de fusée protège l'anneau codeur contre les chocs mécaniques, et ceci tout au long de sa vie : depuis le stockage avant montage, pendant le montage, pendant son utilisation, puis ses éventuels démontages, rénovations et remontages ultérieurs. La solution sans support offre l'avantage de la simplicité, le nombre de pièces étant réduit. L'alternative avec support permet toutefois dans certaines hypothèses une meilleure protection contre les chocs.

La solution proposée s'adapte à tous les types de roulements ; elle permet donc de réparer ou rénover de nombreux assemblages existants par remplacement de pièces, et ceci de façon simple.

L'assemblage comporte en outre un capot de protection de l'anneau codeur, comportant une jupe de protection recouvrant l'anneau codeur. La jupe du capot est en matériau amagnétique, pour ne pas constituer un écran entre l'anneau codeur et un capteur situé en regard de l'anneau, radialement à l'extérieur de l'anneau et du capot. Le capot peut comporter un fond pincé entre le chapeau de fusée et la bague intérieure du roulement. La jupe du capot peut comporter une extrémité rabattue sur le chapeau de fusée pour verrouiller le capot au chapeau de fusée. Le capot offre l'avantage de protéger l'anneau codeur non seulement contre les chocs, mais également contre les pollutions diverses. Le capot peut être conformé de façon à définir avec le chapeau de fusée et/ou le support un volume annulaire clos de logement de l'anneau codeur.

L'anneau codeur peut être fixé à une face du support tournée radialement vers l'intérieur et faisant face au chapeau de fusée.

Alternativement, le codeur peut être fixé directement sur le chapeau de fusée ; il peut avantageusement être emmanché sur le chapeau de fusée. L'anneau codeur peut notamment être fixé dans une gorge annulaire de la jupe du chapeau de fusée, la gorge étant ouverte radialement vers l'extérieur. Cette configuration apporte une protection supplémentaire contre les chocs. La gorge annulaire peut présenter une section en queue d'aronde, l'anneau codeur présentant une forme complémentaire pour une tenue mécanique optimale.

La jupe du chapeau de fusée peut comporter au moins un relief d'indexation, coopérant avec un relief correspondant de l'anneau codeur pour verrouiller en rotation l'anneau par rapport au chapeau de fusée.

Suivant un autre mode de réalisation de l'invention, l'anneau codeur peut être fixé sur une paroi de la jupe du chapeau de fusée tournée radialement vers l'intérieur. L'anneau codeur peut également être fixé sur le support en regard d'une paroi intérieure de la jupe du chapeau de fusée. Dans cette hypothèse, le chapeau de fusée est en matériau amagnétique.

Le support peut être pincé axialement entre le chapeau de fusée et la bague intérieure du roulement.

Préférentiellement, le diamètre D2 est également inférieur à D3.

Préférentiellement, l'anneau codeur est surmoulé ou monté en force sur le support fixe ou le chapeau de fusée, pour assurer une bonne qualité de fixation. La solution de surmoulage offre l'avantage d'éviter les déformations du codeur, d'où une meilleure qualité du signal. De façon intéressante, le codeur peut être réalisé en élasto-ferrite ou plasto-ferrite, ou en un matériau dopé en terres rares.

Selon un mode de réalisation, l'anneau codeur magnétique est fixé radialement à l'extérieur de la jupe du chapeau de fusée et recouvre au moins partiellement la jupe du chapeau de fusée. De ce fait, la jupe du chapeau de fusée ne risque pas de constituer un écran magnétique entre l'anneau codeur magnétique et un capteur situé en regard du codeur, radialement à l'extérieur du chapeau de fusée.

Selon un mode de réalisation de l'invention, le codeur est soit en appui contre la jupe du chapeau de fusée, soit à une distance radiale de la jupe du chapeau de fusée inférieure à 0,5 mm et préférentiellement inférieure à 0,2 mm, de manière à tirer parti d'un effet miroir provoqué par le chapeau de fusée, qui favorise la lecture du codeur magnétique par un capteur placé à distance d'entrefer.

Selon un autre aspect de l'invention, celle-ci a trait à un assemblage instrumenté comprenant :
- une fusée d'essieu, définissant un axe de symétrie de révolution,
- au moins une bague intérieure de roulement montée sur la fusée d'essieu,
- un chapeau de fusée s'étendant axialement à l'extérieur de la bague intérieure, le chapeau de fusée comportant un fond pourvu d'au moins un trou débouchant et une jupe pourvue d'une extrémité distale en appui axial direct ou indirect sur la bague intérieure, le chapeau de fusée présentant un plus grand diamètre extérieur D1, et
- un anneau codeur magnétique fixé au chapeau de fusée ou à un support fixe par rapport au chapeau de fusée, axialement à l'extérieur de la bague intérieure, en recouvrement axial avec la jupe du chapeau de fusée, et présente un diamètre extérieur D2 inférieur à D1.

Selon un autre aspect de l'invention, celle-ci a trait à un assemblage instrumenté pour fusée d'essieu comprenant :
- un chapeau de fusée comportant un fond pourvu d'au moins un trou débouchant et une jupe définissant un axe géométrique de référence, la jupe présentant une extrémité distale opposée au fond et constituant une face d'appui axial,
- un anneau codeur magnétique fixé directement ou indirectement au chapeau de fusée, et
- des moyens de blocage axial et/ou d'indexation radiale de l'anneau codeur magnétique par rapport au chapeau de fusée.

L'assemblage instrumenté ainsi constitué peut être ensuite monté sur une fusée d'essieu.

Avantageusement, l'anneau codeur peut être situé axialement entre le fond et l'extrémité distale du chapeau de fusée. L'anneau codeur peut alors être en appui radial direct ou indirect sur une portée cylindrique du chapeau de fusée.

L'anneau codeur peut être en appui axial direct ou indirect contre un épaulement annulaire axial chapeau de fusée, qui constitue alors tout ou partie des moyens de blocage axial.

L'anneau codeur peut être fixé à un support annulaire fixé au chapeau de fusée. Selon diverses variantes :
- le support peut être pincé axialement entre un épaulement du chapeau de fusée et un rebord du chapeau de fusée rabattu sur le support.
- le support peut être déformé pour pénétrer dans un évidement du chapeau de fusée.
- l'évidement peut présenter une ouverture tournée radialement vers l'extérieur ou une ouverture axiale tournée à l'opposé de l'extrémité distale du chapeau de fusée, cet évidement pouvant être annulaire.

Selon un mode de réalisation, les moyens de blocage axial comportent un capot de protection annulaire définissant avec le chapeau de fusée un volume clos de logement de l'anneau codeur. Ce capot peut notamment être fretté ou serti sur le chapeau de fusée. L'anneau codeur est ainsi particulièrement bien protégé, aussi bien durant les phases de stockage précédant le montage sur la fusée d'essieu que durant la vie ultérieure du montage.

Selon un autre aspect de l'invention, celle-ci a trait à une méthode de montage d'un assemblage instrumenté tel que précédemment décrit, sur une fusée d'essieu, comportant les étapes suivantes :
- montage de l'assemblage instrumenté pour former un sous-ensemble mécaniquement cohérent,
- montage du sous-ensemble mécaniquement cohérent sur la fusée d'essieu et serrage par l'intermédiaire d'au moins une tige filetée traversant le trou du fond du chapeau de fusée.

Lors de l'étape de montage sur la fusée d'essieu, le codeur qui fait partie intégrante de l'assemblage instrumenté préalablement assemblé en un sous-ensemble cohérent, est protégé des chocs.

### BRÈVE DESCRIPTION DES FIGURES

D'autres caractéristiques, détails et avantages de l'invention ressortiront à la lecture de la description qui suit, en référence aux figures annexées, qui illustrent :
- la figure 1, une coupe longitudinale d'une fusée d'essieu ferroviaire équipée d'un assemblage instrumenté à roulement selon un premier mode de réalisation de l'invention ;
- la figure 2, un détail de l'assemblage instrumenté de la fusée de la figure 1 ;
- les figures 3 à 24, des variantes de réalisation, dont certaines, à savoir les variantes des figures 7, 9 et 11, n'entrent pas dans le champ de protection des revendications, mais sont utiles à l'exposé de l'invention.

Pour plus de clarté, les éléments identiques ou similaires sont repérés par des signes de référence identiques sur l'ensemble des figures.

### DESCRIPTION DETAILLEE D'UN MODE DE RÉALISATION

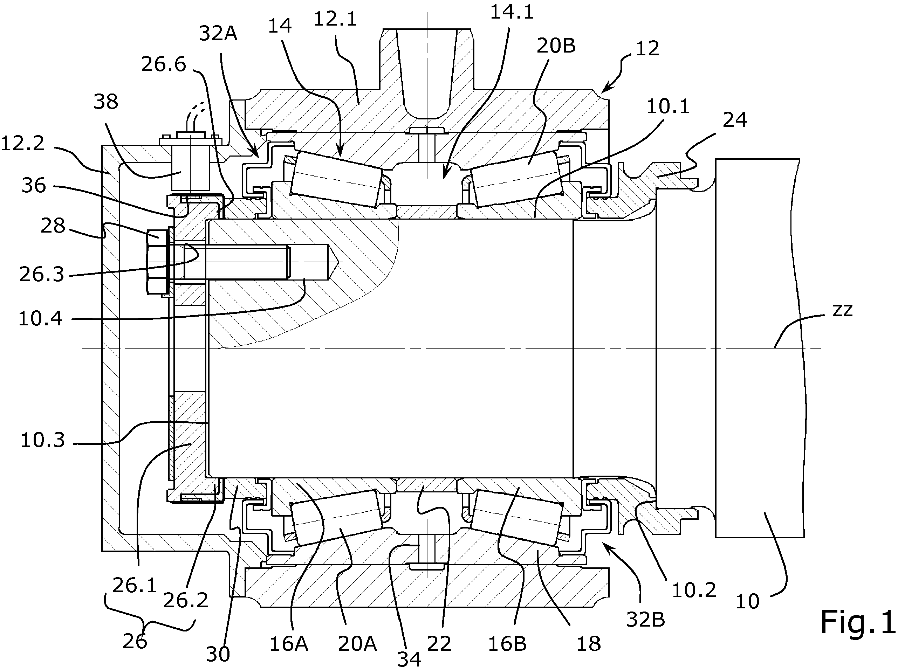

La figure **1** illustre une fusée d'essieu **10** de véhicule ferroviaire, montée en rotation à l'intérieur d'une boîte d'essieu **12** par l'intermédiaire d'un roulement **14** comportant au moins une bague intérieure **16A**, au moins une bague extérieure **18** et des corps roulants **20A**, **20B**. En l'espèce, mais ceci est sans caractère limitant pour la présentation de l'invention, le roulement est à deux rangées de corps roulants, les corps roulants **20A**, **20B** étant constitués par des rouleaux coniques, ces rouleaux roulant sur la bague extérieure 18 à deux chemins de roulement et sur deux bagues intérieures **16A**, **16B**, une par rangée de rouleaux **20A**, **20B**, séparées par une entretoise 22.

L'axe de rotation **ZZ** de la fusée d'essieu constitue un axe de référence pour le dispositif. Les bagues intérieures **16A**, **16B** sont emmanchées sur une portée cylindrique **10.1** de la fusée d'essieu. Une entretoise **24** peut être interposée entre les bagues intérieures **16A**, **16B** et un épaulement **10.2** de la fusée d'essieu **10**. Pour maintenir axialement cet assemblage, un chapeau de fusée **26** présentant un fond **26.1** et une jupe **26 .2** est fixé à l'extrémité libre **10.3** de la fusée **10** par l'intermédiaire de moyens de fixation, en l'espèce des vis **28** traversant des alésages **26.3** usinés dans le fond **26.1** du chapeau de fusée **26** et vissés dans des trous fileté **10.4** à l'extrémité **10.3** de la fusée d'essieu **10**. Une ou plusieurs entretoises **30** peuvent être interposées entre l'extrémité libre **26.6** de la jupe du chapeau de fusée et les bagues intérieures **16A**, **16B** du roulement. La chaine de cotes est telle que lors du vissage des vis de fixation **28** à un couple prédéterminé de montage, le chapeau de fusée **26** vient contraindre axialement les bagues intérieures **16A**, **16B** du roulement en direction de l'épaulement **10.2**, par l'intermédiaire des entretoises **22**, **24**, **30** si celles-ci sont présentes.

La bague extérieure **18** est montée dans un carter cylindrique **12.1** de la boîte d'essieu **12**, fermé par un couvercle **12.2** qui recouvre le chapeau de fusée **26**.

Les bagues **16A**, **16B** et **18** délimitent entre elles un volume **14.1** pour les corps roulants, volume qui est clos axialement par des systèmes d'étanchéité **32A**, **32B**, constitués dans cet exemple par des déflecteurs délimitant entre eux, sans contact, une perte de charge ou chicane limitant la pénétration de polluants dans le roulement et la sortie de lubrifiant. On distingue également sur la figure **1** un canal **34** permettant de recharger régulièrement le roulement en lubrifiant.

L'assemblage est équipé d'un ensemble d'instrumentation constitué d'un anneau codeur **36** solidaire de la partie tournante et d'un capteur **38** solidaire de la partie fixe, à savoir le carter de boîte d'essieu. De manière remarquable, cet ensemble d'instrumentation est situé axialement à l'extérieur du roulement, entre celui-ci et l'extrémité axiale du couvercle de la boîte d'essieu.

Le codeur **36** est constitué par un anneau magnétisé présentant une pluralité de pôles nord et sud se succédant le long de sa circonférence. Le capteur **38** est situé à distance et en regard de l'anneau codeur, de manière à lire les variations du champ électromagnétique induites par le passage des pôles nord et sud lors de la rotation de la fusée d'essieu. L'ensemble d'instrumentation fournit ainsi au moins une information de vitesse de rotation de l'essieu, à laquelle peuvent s'ajouter d'autres informations, relatives par exemple au positionnement angulaire de l'essieu ou au déplacement axial de l'essieu.

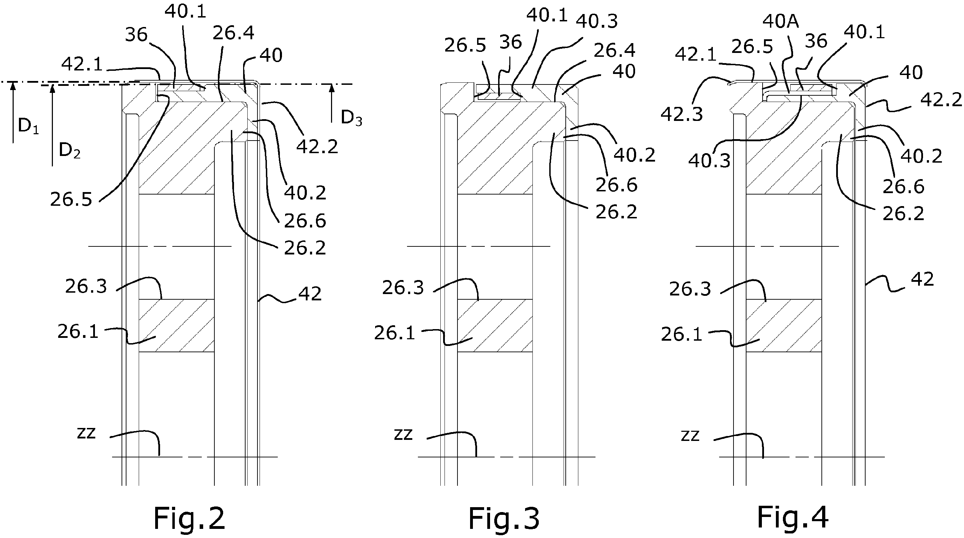

Comme le montre plus précisément la figure **2**, le codeur **36** est fixé sur un support annulaire **40** emmanché sur une portée cylindrique extérieure **26.4** de la jupe **26.2** du chapeau de fusée, dans un renfoncement radial délimité axialement d'un côté par un épaulement **26.5** du chapeau de fusée et de l'autre par un épaulement **40.1** du support annulaire. De manière remarquable, le plus grand diamètre extérieur **D1** du chapeau de fusée, au niveau de l'épaulement **26.5**, est supérieur au diamètre extérieur **D2** de l'anneau codeur. De même, le plus grand diamètre extérieur **D3** du support annulaire **40**, mesuré au niveau de l'épaulement **40.1**, est supérieur au diamètre extérieur **D2** de l'anneau codeur. Un capot **42** comportant une jupe cylindrique **42.1** de faible épaisseur en matériau amagnétique recouvre le support annulaire **40** et le codeur **36** et ferme le renfoncement où se trouve placé le codeur **36**. L'extrémité libre **26.6** de la jupe du chapeau de fusée forme une face annulaire plane. Le support annulaire **40** présente un fond **40.2** constitué par une paroi plane annulaire qui vient en regard et au contact de la face plane **26.6** d'extrémité de la jupe du chapeau de fusée. De même le capot comporte un fond **42.2** constitué par une paroi annulaire plane qui vient recouvrir le fond **40.2** du support annulaire.

Sur la figure **2**, le sous-ensemble instrumenté constitué par le chapeau de fusée **26**, le support annulaire **40**, le codeur **36** et le capot **42**, est illustré avant son montage sur la fusée d'essieu. De manière remarquable, l'extrémité libre de la jupe **42.1** du capot est emmanchée en force sur le chapeau de fusée **26** ou le support **40**, de sorte que ce sous-ensemble est mécaniquement cohérent. Il peut donc être manipulé comme un tout, sans risque d'endommager le codeur **36**.

Lors du montage sur la fusée d'essieu **10**, le capot **42** et le support annulaire **40** se trouvent pincés entre la face plane d'extrémité **26.6** de la jupe du chapeau d'essieu et l'entretoise **30**, interdisant tout mouvement ultérieur relatif de ces pièces, même en cas de fortes vibrations.

Selon la variante de la figure **3**, le support annulaire **40** tient également lieu de capot. Pour ce faire, le support annulaire comporte une jupe **40.3** présentant une partie emmanchée sur une portée cylindrique **26.4** du chapeau de fusée et une deuxième partie d'extrémité d'épaisseur plus faible. Un espace protégé pratiquement clos est ainsi délimité entre la portée cylindrique **26.4** du chapeau de fusée, la partie d'extrémité de la jupe **40.3** du support annulaire **40**, l'épaulement **26.5** du chapeau de fusée et un épaulement **40.1** du support faisant la jonction entre les deux parties. Dans cet espace clos est disposé l'anneau codeur **36** qui est fixé, par exemple par surmoulage, sur le support annulaire.

Selon la variante de la figure **4**, l'anneau codeur **36**, en matériau élasto-ferrite ou plasto-ferrite ou matériau magnétique de type céramique dopé en terres rares (NdFeB ou SaCo), est surmoulé sur une coupelle **40A** en tôle emboutie, elle-même emmanchée en force sur un support annulaire **40** similaire à celui de la figure **2**. La coupelle **40A** est pincée axialement entre l'épaulement **26.5** du chapeau de fusée et la jupe **40.3** du support annulaire. Pour former un ensemble cohérent, un capot en matériau amagnétique **42** est emmanché sur le support annulaire et l'on vient sertir l'extrémité **42.3** de sa jupe **42.1** sur le chapeau de fusée. Lors du montage de ce sous-ensemble sur la fusée d'essieu **10**, les efforts axiaux sont transmis depuis les vis **28** jusqu'aux bagues intérieures **16A**, **16B** du roulement par l'intermédiaire de l'épaulement **26.5** du chapeau de fusée, de la coupelle annulaire **40A**, du support annulaire **40**, du capot **42** et de l'entretoise **30**.

Selon une variante non représentée, on peut également fretter l'extrémité de la jupe **42.1** du capot **42** de la figure **2**, de façon analogue à ce qui est réalisé sur la figure **4**.

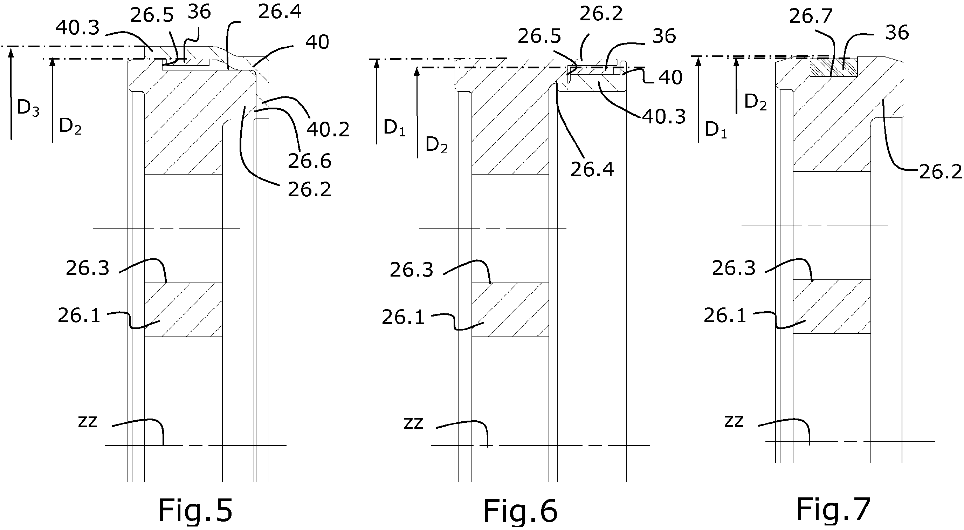

La variante de la figure **5** dérive directement de celle de la figure **3**, dont elle ne diffère que par la forme du support annulaire **40**, dont la jupe **40.3** vient s'emmancher sur le plus grand diamètre du chapeau de fusée **26**, pour clore totalement le volume annulaire de logement de l'anneau codeur **36**.

Suivant la variante de la figure **6**, l'anneau codeur **36** est fixé au support annulaire **40** et logé à l'intérieur de la jupe **26.2** du chapeau de fusée, qui est dans ce cas en matériau au moins localement amagnétique, pour ne pas faire écran à la mesure.

Les variantes de réalisation représentées sur les figures **7** à **10** se distinguent des précédentes par le fait que l'anneau codeur **36** est fixé directement sur le chapeau de fusée **26**.

Suivant la variante de la figure **7**, l'anneau codeur **36** est logé dans une gorge annulaire **26.7** du chapeau de fusée, ouverte radialement vers l'extérieur et délimitée axialement par deux épaulements. On parvient ainsi, en minimisant le nombre de pièce, à une protection satisfaisante du codeur contre les chocs lors des manutentions.

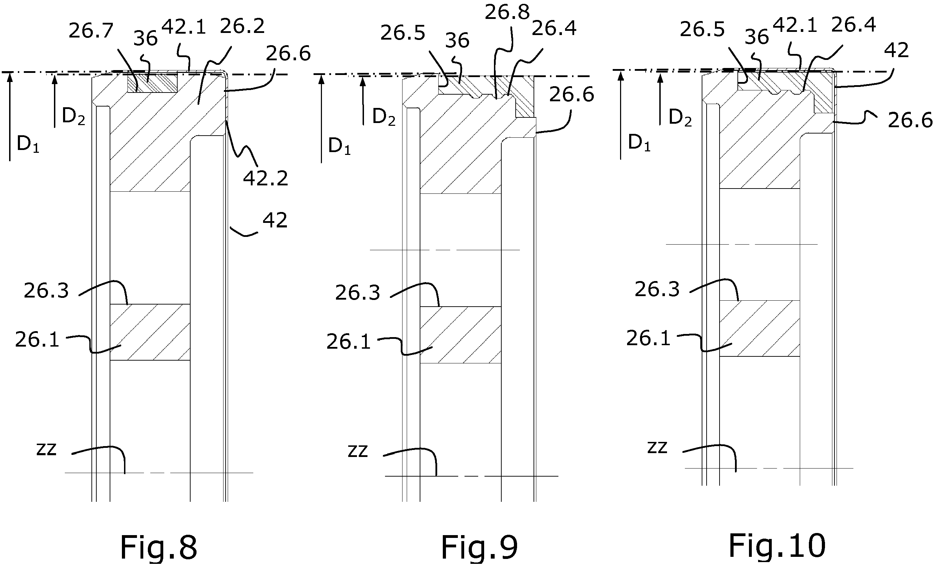

Pour améliorer cette protection, on peut toutefois ajouter un capot au moins partiellement amagnétique **42** présentant une jupe **42.1** qui vient s'emmancher sur le chapeau de fusée et fermer totalement la gorge **26.7** de logement de l'anneau codeur, comme représenté sur la figure **8**. Pour fixer ce capot de manière sécurisée lors du montage sur la fusée d'essieu, on prévoit que la jupe se prolonge par une paroi plane **42.2** qui se retrouve, en position montée, pincée entre le chapeau de fusée et le roulement.

Suivant la variante de la figure **9**, on peut également prévoir de fixer le codeur **36** à la surface extérieure **26.4** de la jupe, qui peut présenter des gorges **26.8** ou reliefs divers sur lesquels est surmoulé l'anneau codeur **36**, de manière à en améliorer la solidarisation. Dans cette variante minimaliste, la protection du codeur est assurée par la partie de plus grand diamètre **D1** du chapeau de fusée **26** formant l'épaulement **26.5** et dont le diamètre doit impérativement être plus grand que celui **D2** de l'anneau codeur. On peut toutefois prévoir, pour constituer un logement fermé pour l'anneau codeur, un capot **42**, illustré sur la figure **10**, similaire dans sa structure et sa fonction à celui de la variante de la figure **7**.

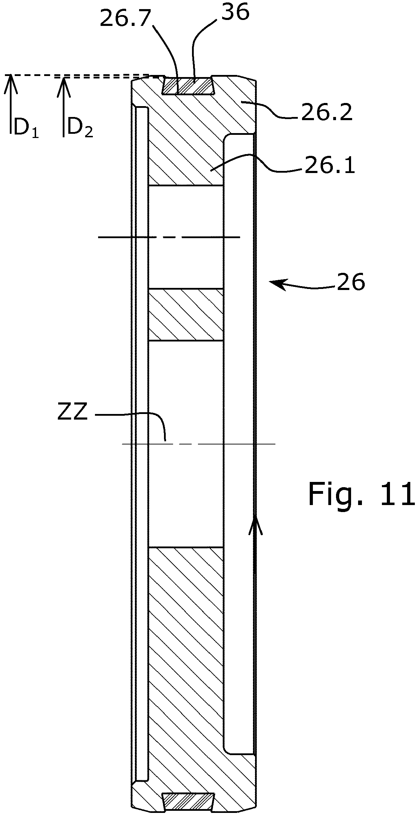

Le mode de réalisation de la figure **11** constitue une autre variante de celui de la figure **7**, et potentiellement de la figure **8**, qui se distingue par une gorge annulaire **26.7** dont la section est en queue d'aronde, l'anneau codeur **36** ayant une forme correspondante pour améliorer la fixation de l'anneau **36** dans la gorge **26.7**. Les formes conjuguées de la gorge **26.7** et de l'anneau codeur **36** permettent d'assurer un blocage axial et en rotation de l'anneau codeur par rapport au chapeau de fusée **26**. Le nombre de pièces dans ce mode de réalisation est particulièrement réduit, tout en assurant une bonne protection de l'anneau codeur dans les phases de montage du sous-ensemble instrumenté constitué par le chapeau de fusée équipé de son codeur sur la fusée d'essieu. Le cas échéant, un capot amagnétique peut venir recouvrir l'anneau codeur. On remarquera que la gorge **26.7** est préférablement constituée dans l'épaisseur du fond **26.1** du chapeau de fusée plutôt que dans la jupe **26.2**, de façon à ne pas affaiblir mécaniquement le chapeau de fusée, et à ne pas gêner le cas échéant le passage d'un courant électrique transitant par le chapeau de fusée entre les parties tournantes et les parties fixe de la boîte d'essieu.

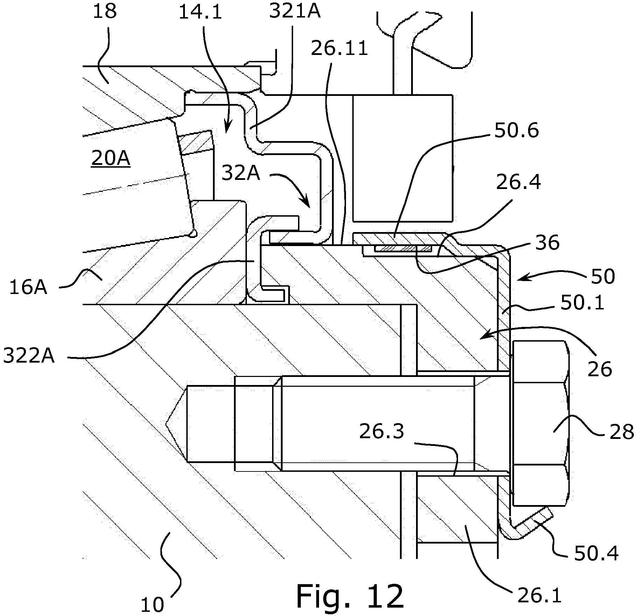

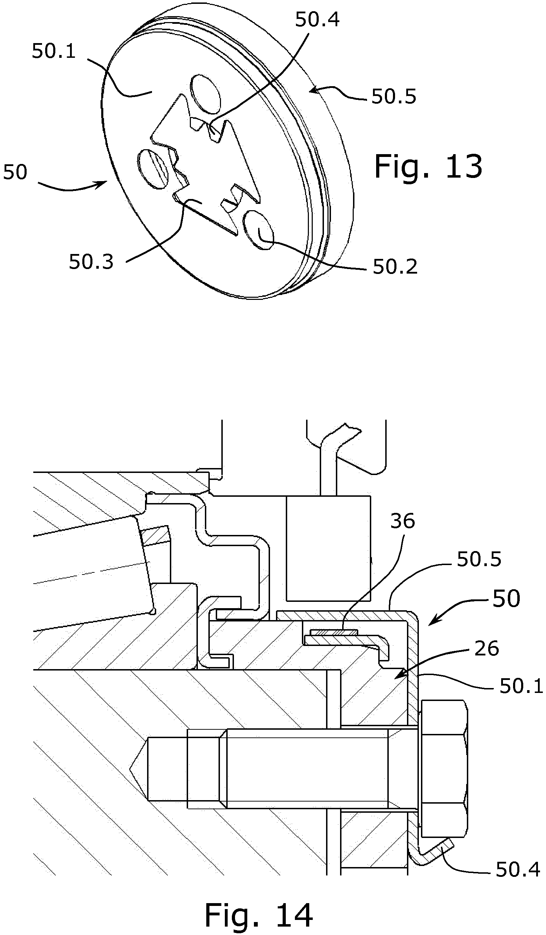

Les figures **12** et **13** illustrent un assemblage à roulement instrumenté pour essieu et chapeau de fusée selon un autre mode de réalisation de l'invention. Sur la fusée d'essieu **10** est monté un roulement comprenant une bague intérieure **16A**, des corps roulants **20A** et une bague extérieure **18**. Afin d'isoler et de délimiter l'espace intérieur **14.1** du roulement, plusieurs déflecteurs **32A** ou autres systèmes d'étanchéité peuvent être prévus. En l'occurrence, un premier déflecteur **321A** est lié à la bague extérieure fixe **18** tandis qu'un deuxième déflecteur **322A** est lié à la bague intérieure rotative **16A**.

Un chapeau de fusée **26** est prévu, disposé sur l'extrémité de la fusée d'essieu **10**. Le chapeau de fusée **26** est en appui axial indirect sur la bague intérieure **16A** par l'intermédiaire du deuxième déflecteur **322A**, qui est axialement intercalé entre ces deux éléments. La fixation du chapeau de fusée **26** sur la fusée **10** est réalisée par au moins une vis **28** par exemple à tête hexagonale traversant un trou **26.3** réalisé dans le fond **26.1** plat du chapeau de fusée **26** qui coiffe l'extrémité de la fusée **10**.

Une rondelle frein **50** est prévue afin notamment et de façon connue de bloquer en rotation la ou les vis de liaison **28**. Pour réaliser cette fonction, la rondelle frein **50** comprend un disque d'extrémité **50.1** muni d'orifices **50.2** pour le passage d'une ou plusieurs vis de liaison **28** et d'une découpe centrale **50.3** prévoyant des pattes **50.4** repliables sur la ou les têtes de vis **28** pour empêcher tout desserrage des vis **28**.

Conformément à l'invention la rondelle frein **50** comprend en outre une jupe **50.5** destinée à être montée à l'extrémité du chapeau de fusée **26** et plus précisément à recouvrir tout ou partie de sa paroi cylindrique extérieure. La partie distale **50.6** de la jupe **50.5** est destinée à être emmanchée sur une portée cylindrique **26.11** formée sur la paroi extérieure du chapeau de fusée **26**, comme visible sur la figure **12**. Un volume cylindrique clos est ainsi constitué entre la jupe **50.5** et une face cylindrique **26.4** du chapeau de fusée **26**, située radialement en retrait par rapport à la portée cylindrique **26.11** et axialement entre la portée **26.11** et l'extrémité axiale du chapeau de fusée **26**.

La face de la jupe **50.5** en regard de la face **26.4** du chapeau de fusée est recouverte par un codeur magnétique annulaire **36**, qui peut y être fixé par exemple par surmoulage. La rondelle frein **50** ou tout au moins la jupe **50.5** est ici constituée d'un matériau amagnétique par exemple à base d'aluminium, de cuivre, ou encore certains types d'aciers inoxydables.

Cette disposition permet avantageusement de protéger le codeur magnétique **36**, qui se trouve dans un volume clos situé radialement entre le chapeau de fusée **26** et la rondelle frein **50**.

Une variante de réalisation du mode de réalisation précédent est représentée sur la figure **14**. Le codeur **36** est cette fois emmanché sur la paroi extérieure du chapeau de fusée **26**, à proximité de son extrémité axiale et recouvert par la jupe amagnétique **50.5** de la rondelle de frein **50**.

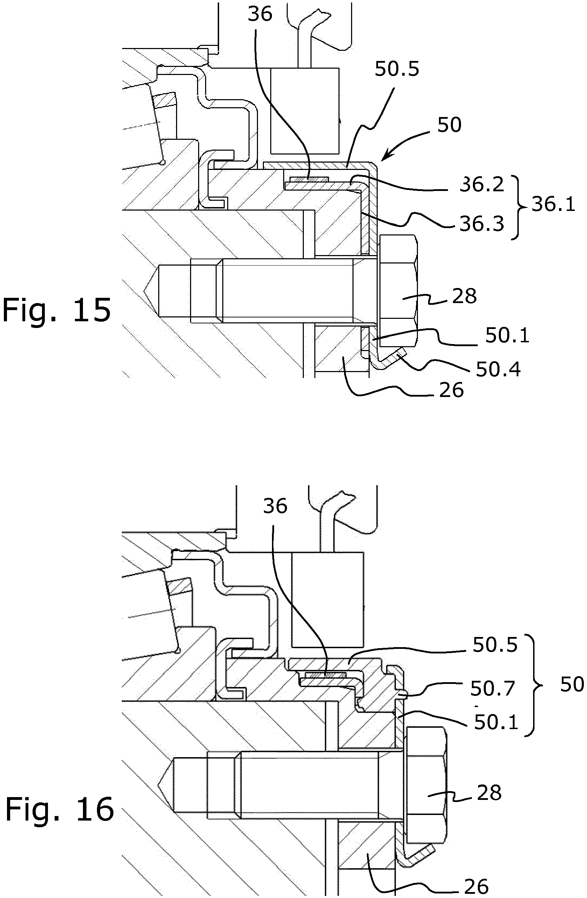

Suivant une autre variante de réalisation représentée sur la figure **15**, le codeur **36** peut être fixé sur une coupelle **36.1** tout entière située dans le volume délimité par la jupe **50.5** de la rondelle frein **50** et le chapeau de fusée **26**. La coupelle **36.1** comporte elle-même une jupe cylindrique **36.2** qui porte le codeur **36** et un fond **36.3** pincé axialement entre le fond **50.1** de la rondelle frein **50** et le chapeau de fusée **26**. Le fond **36.3** de la coupelle est avantageusement traversé par la ou les vis de fixation **28** qui assurent le maintien mécanique de la coupelle **36.1** et du codeur **36** avec une très grande fiabilité dans le temps, même en cas de vibrations importantes.

Dans les modes de réalisation précédents des figures **12** à **15**, la jupe **50.5** et le fond **50.1** de la rondelle frein **50** sont d'un seul tenant, réalisés d'une pièce dans un matériau amagnétique. Suivant la variante de réalisation de la figure **16**, il est toutefois envisageable de prévoir une jupe **50.5** qui soit rapportée sur le fond **50.1** de la rondelle frein **50**. La rondelle frein **50** peut alors être pourvue d'un relief d'indexation **50.7** de la position angulaire de la jupe **50.5**. La construction en deux parties offre l'avantage d'optimiser le choix des matériaux du fond et de la jupe pour les adapter à leurs fonctions respectives. Dans cette hypothèse, notamment, le fond **50.1** de la rondelle n'est pas nécessairement en matériau amagnétique. Selon une variante de montage, la jupe **50.5**, équipée du codeur, est préassemblée sur le fond **50.1**, avant montage de la rondelle frein **50** sur le chapeau de fusée **26**. Alternativement, la jupe **50.5** peut être préassemblée sur le chapeau de fusée **26**, et la rondelle frein montée dans un deuxième temps.

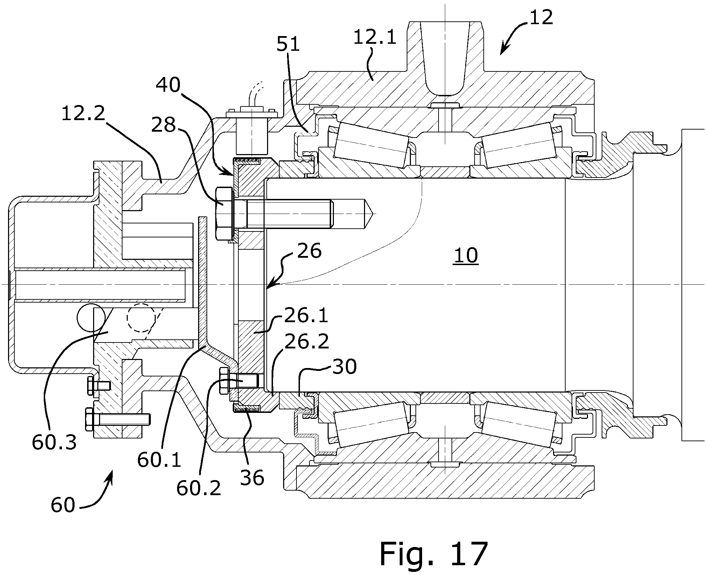

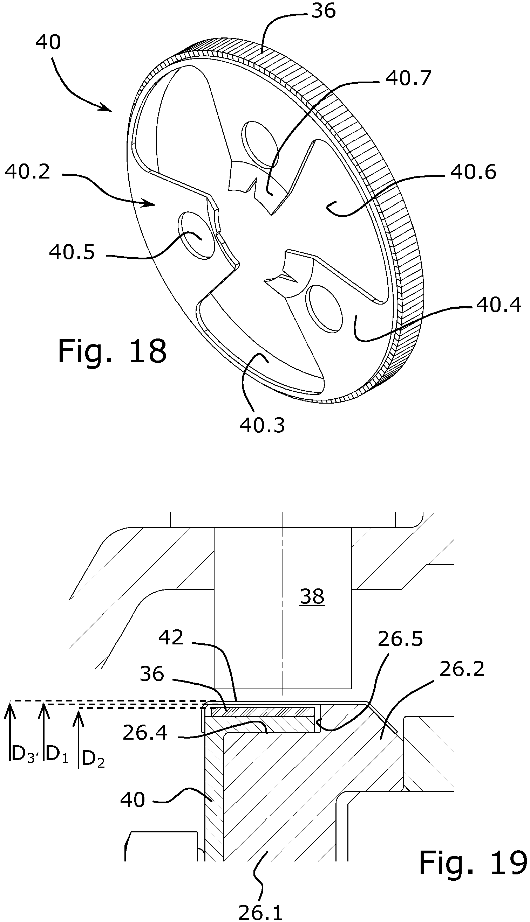

Sur les figures **17** à **19** sont représentées différentes vues d'un autre mode de réalisation d'une boîte d'essieu selon l'invention. On se référera au descriptif des modes de réalisation précédents pour les éléments communs, qui portent des numéros de référence identiques. Ce mode de réalisation se distingue des précédents par la présence d'un support **40** spécifique de fixation du codeur **36**, représenté en détail sur la figure **18**, et par la présence d'un collecteur de courant **60** pour réaliser une boucle de retour de courant. Le support **40** du codeur **36** est constitué par une jupe cylindrique **40.3** solidaire d'un fond **40.2** présentant une ou plusieurs pattes **40.4**, pourvues de trous de passage **40.5** pour des vis de fixation **28**, le fond **40.1** présentant également au moins une ouverture **40.6**, et dans l'exemple de réalisation illustré, un nombre d'ouvertures **40.6** égal au nombre de pattes **40.4**, séparant ces dernières.

Le codeur **36** est surmoulé sur la face de la jupe **40.3** tournée radialement vers l'extérieur. L'ensemble constitué par le support **40** et le codeur **36** est emmanché sur une portée cylindrique **26.4** du chapeau de fusée, située entre l'extrémité axiale du fond **26.1** du chapeau de fusée et un épaulement intermédiaire **26.5**. La portée cylindrique **26.4** est préférablement constituée dans l'épaisseur du fond **26.1** du chapeau de fusée, de manière à ne pas affaiblir mécaniquement la jupe **26.2** et à ne pas perturber le cas échéant le passage d'un courant électrique entre l'équipage tournant et le carter **12.1** de la boîte d'essieu **12**.

Un capot annulaire de protection **42** constitué par une fine tôle en matériau amagnétique est serti sur le chapeau de fusée, de façon à définir avec le chapeau de fusée **26** et le support **40** du codeur un espace annulaire clos pour le codeur **36**. De manière remarquable dans cet exemple, le plus grand diamètre **D2** du codeur est inférieur au plus grand diamètre **D1** du chapeau de fusée, mesuré au niveau de l'épaulement, et au plus grand diamètre **D3' du** capot de protection.

Le positionnement et la fixation du support du codeur **36** sont assurés par les vis de fixation **28**, qui peuvent le cas échéant également assurer simultanément la fixation du chapeau de fusée **26** à la fusée d'essieu **10**. Cette fixation garantie une bonne tenue mécanique dans le temps, même dans un environnement sévère soumis à de fortes vibrations. Le cas échéant, le support **40** du codeur peut également constituer une rondelle frein pour les vis de fixation, ce que permettent alors des languettes **40.7** destinées à se rabattre sur les têtes des vis de fixation.

Par ailleurs, une plaque **60.1** de retour de courant est fixée au chapeau de fusée **26** par l'intermédiaire d'une vis spécifique **60.2**. Cette vis **60.2** est située au niveau d'une des ouvertures **40.6** du support **40** du codeur, de sorte que la plaque de retour de courant **60.1** se trouve en contact direct avec le chapeau de fusée **26**. Dans l'exemple de réalisation, la vis **60.2** ne pénètre pas directement dans la fusée d'essieu **10** et ne constitue pas une vis de fixation du chapeau de fusée **26** à la fusée d'essieu **10**. Toutefois, dans une variante non représentée, il est envisageable d'utiliser l'une des vis de fixation **28** du chapeau de fusée **26** à la fusée d'essieu **10** pour également fixer la plaque **60.1**. Les balais **60.3** du collecteur de courant **60**, solidaires du couvercle **12.2** de la boîte d'essieu, viennent en contact frottant sur la plaque, qui fait partie de l'équipage tournant solidaire de l'essieu, pour constituer un chemin électrique pour le courant électrique circulant entre les rails, et les équipements électriques du véhicule.

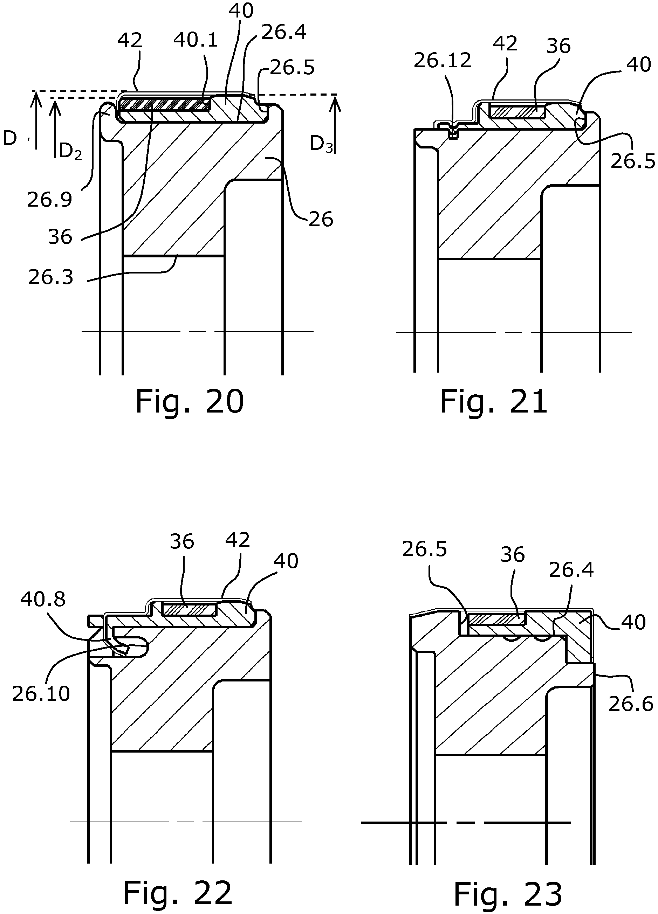

Les modes de réalisation des figures **20** à **23** illustrent diverses variantes destinées à garantir la tenue mécanique du codeur **36** pour une longue durée dans un environnement sévère du point de vue des chocs et vibrations.

Suivant la variante illustrée sur la figure **20**, le codeur **36** est surmoulé ou emmanché sur un support **40**, qui est lui-même emmanché en force sur une portée cylindrique **26.4** du chapeau de fusée **26**, limitée par un épaulement d'extrémité **26.5**. Le rebord **26.9** du chapeau de fusée est ensuite rabattu par sertissage vers le support **40**, de sorte que le support **40** du codeur se trouve emprisonné axialement de part et d'autre par l'épaulement **26.5** et le rabat **26.9**. Le support **40** du codeur comporte lui-même un épaulement **40.1** dont le plus grand diamètre **D3** est plus grand que le diamètre extérieur **D2** du codeur, assurant ainsi une protection du codeur dans la phase de montage. Cette protection peut être accrue en prévoyant de manière optionnelle un capot **42** fixé, par exemple par sertissage, au support, et dont une extrémité est pincé par le rabat serti du chapeau de fusée, et dont le plus grand diamètre **D3**' est également plus grand que **D2**.

Selon la variante de la figure **21**, le support **40** du codeur **36** est en appui axial contre un épaulement **26.5** d'extrémité du chapeau de fusée, alors que l'on vient déformer la matière de la tôle du support dans une gorge annulaire **26.12** du chapeau de fusée de façon à réaliser un arrêt axial par frettage. On peut également prévoir dans cette variante un capot de protection supplémentaire **42**, le capot **42** et le support **40** étant frettés simultanément lors d'une même opération à l'aide d'une molette. Suivant une variante, on peut déformer la matière de la tôle localement dans une gorge non annulaire **26.12**, pour former un arrêt axial et radial.

Selon la variante de la figure **22**, le support **40** du codeur est pourvu d'une languette **40.8** qui est rabattue dans une gorge annulaire axiale **26.10** réalisée sur le chapeau de fusée, pour assurer l'arrêt axial du support **40**. On peut également prévoir dans cette variante un capot de protection supplémentaire **42**, le capot et le support étant rabattus simultanément dans la gorge **26.10**. Suivant une variante, la gorge **26.10** peut ne pas être annulaire, de manière à constituer une fixation axiale et radiale.

Selon la variante de la figure **23**, le chapeau de fusée est pourvu d'une portée cylindrique **26.4** ouverte axialement du côté de l'extrémité distale **26.6** en regard du roulement **14** et limitée du côté du fond **26.1** du chapeau de fusée par un épaulement **26.5**. Le support **40** du codeur est fretté sur cette portée cylindrique **26.4** du chapeau de fusée, axialement en retrait par rapport à l'extrémité **26.6** du chapeau de fusée. Le frettage assure l'arrêt axial et l'arrêt en rotation. Un capot **42** peut également être prévu. Bien que le support **40** de l'anneau codeur 36 soit à distance de l'entretoise **30**, le jeu entre ces pièces est faible après montage, pour limiter le déplacement axial du codeur en cas de migration axiale dans un environnement sévère.

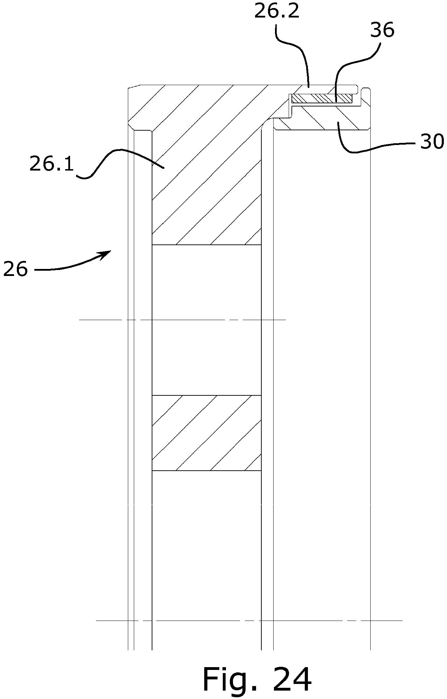

Le mode de réalisation de la figure **24** vise quant à lui le cas d'un codeur **36** fixé à la paroi cylindrique intérieure de la jupe **26.2** du chapeau de fusée **26**, en regard d'une entretoise **30** qui vient en appui, directement ou avec interposition d'un déflecteur **32A**, sur la bague intérieure **16A**. Dans cette configuration, il est impératif que la jupe **26.2** soit constituée en un matériau amagnétique, de sorte que le signal du codeur soit lisible par un capteur situé radialement à l'extérieur de la jupe **26.2**. L'entretoise est avantageusement en un matériau magnétique, pour favoriser un effet miroir d'amplification du signal électromagnétique vu par le capteur. Il est avantageux que l'entretoise **30** soit emmanchée en force sur le chapeau de fusée **26** après montage du codeur **36**, mais avant montage de ce sous-ensemble sur la fusée d'essieu, de façon à protéger le codeur **36** durant la phase d'assemblage.

De nombreuses variantes sont possibles sans sortir du cadre de l'invention. On peut en particulier prévoir un support pour l'anneau codeur qui soit dépourvu de fond. Dans ce cas, et dans la mesure où il n'y a pas pincement du support entre le chapeau de fusée et la ou les bagues intérieures lors du montage sur la fusée d'essieu, il est nécessaire de prévoir une fixation positive du support par rapport au chapeau de fusée. La même remarque s'applique au capot.

Il n'est pas nécessaire qu'il y ait une entretoise interposée entre la ou les bagues intérieures du roulement et le chapeau de fusée. S'il y a un support pour l'anneau codeur ou un capot, celui-ci peut également assurer la fonction d'entretoise.

Enfin, il est possible de combiner entre elles des caractéristiques techniques des différents modes de réalisation, pour réaliser d'autres variantes.

## Revendications

1. Assemblage instrumenté pour fusée d'essieu comprenant :
- un chapeau de fusée (26) comportant un fond (26.1) pourvu d'au moins un trou débouchant (26.3) et d'une jupe (26.2) définissant un axe géométrique de référence (ZZ), la jupe présentant une extrémité distale (26.6) opposée au fond et constituant une face d'appui axial, le chapeau de fusée présentant un plus grand diamètre extérieur D1,
- un anneau codeur magnétique (36), fixé soit à un support (40, 50) fixe par rapport au chapeau de fusée (26) présentant un diamètre D3, en recouvrement axial avec le chapeau de fusée (26), soit directement au chapeau de fusée (26), et présentant un diamètre extérieur D2 inférieur à D1, et
- un capot de protection (42) de l'anneau codeur (36), comportant une jupe de protection (42.1) en matériau amagnétique recouvrant l'anneau codeur.

2. Assemblage instrumenté selon la revendication 1, **caractérisé en ce que** le capot de protection (42) comporte un fond (42.2) pincé entre le chapeau de fusée (26) et une bague intérieure (16A) d'un roulement de l'assemblage instrumenté.

3. Assemblage instrumenté selon l'une quelconque des revendications précédentes, **caractérisé en ce que** la jupe (42.1) du capot de protection comporte une extrémité (42.3) rabattue sur le chapeau de fusée pour verrouiller le capot de protection au chapeau de fusée.

4. Assemblage instrumenté selon l'une quelconque des revendications précédentes, **caractérisé en ce que** l'anneau codeur (36) est fixé à une face du support (40) tournée radialement vers l'intérieur et faisant face au chapeau de fusée (26).

5. Assemblage instrumenté selon l'une quelconque des revendications 1 à 3, **caractérisé en ce que** l'anneau codeur (36) est fixé directement au chapeau de fusée (26).

6. Assemblage instrumenté selon la revendication 5, **caractérisé en ce que** l'anneau codeur (36) est fixé dans une gorge annulaire (26.7) de la jupe du chapeau de fusée, la gorge (26.7) étant ouverte radialement vers l'extérieur.

7. Assemblage instrumenté selon la revendication 6, **caractérisé en ce que** la gorge annulaire 26.7 présente une section en queue d'aronde, l'anneau codeur (36) présentant une forme complémentaire.

8. Assemblage instrumenté selon l'une quelconque des revendication 5 à 7, **caractérisé en ce que** la jupe du chapeau de fusée comporte au moins un relief d'indexation (26.8), coopérant avec un relief correspondant de l'anneau codeur pour verrouiller l'anneau par rapport au chapeau de fusée.

9. Assemblage instrumenté selon l'une quelconque des revendications 1 à 3, **caractérisé en ce que** l'anneau codeur (36) est fixé sur une paroi de la jupe du chapeau de fusée tournée radialement vers l'intérieur.

10. Assemblage instrumenté selon l'une quelconque des revendications 1 à 3, **caractérisé en ce que** l'anneau codeur (36) est fixé sur un support (40) en regard d'une paroi intérieure de la jupe du chapeau de fusée.

11. Assemblage instrumenté selon la revendication 10, **caractérisé en ce que** le support (40) est pincé axialement directement ou indirectement entre le chapeau de fusée et une bague intérieure d'un roulement de l'assemblage instrumenté.

12. Assemblage instrumenté selon l'une quelconque des revendications précédentes, **caractérisé en ce que** D2 est inférieur à D3.

13. Assemblage instrumenté selon l'une quelconque des revendications précédentes, **caractérisé en ce que** l'anneau codeur (36) est surmoulé ou monté en force sur le support fixe (40, 50) ou le chapeau de fusée (26).

14. Assemblage instrumenté selon l'une quelconque des revendications précédentes, **caractérisé en ce que** l'anneau codeur (36) est fixé radialement à l'extérieur de la jupe (26.2) du chapeau de fusée et recouvre au moins partiellement la jupe (26.2) du chapeau de fusée.

15. Assemblage instrumenté selon l'une quelconque des revendications précédentes, **caractérisé en ce que** l'anneau codeur (36) est soit en appui contre la jupe (26.2) du chapeau de fusée, soit à une distance radiale de la jupe (26.2) du chapeau de fusée inférieure à 0,5 mm et préférentiellement inférieure à 0,2 mm.
